# EUROPÄISCHE PATENTANMELDUNG

(11) **EP 1 092 463 A1**
(43) Veröffentlichungstag der Anmeldung: **18.04.2001**
(21) Anmeldenummer: 00121774.4
(22) Anmeldetag: 05.10.2000
(51) Int. Cl.: B01D 46/24

(54) **Filtervorrichtung und Vorrichtung zur Halterung von Filterpatronen**

(30) Priorität: 15.10.1999 DE 19949894
(71) Anmelder: SULT Staub- und Lufttechnik GmbH, 71083 Herrenberg (DE)
(72) Erfinder: Schröder, Ulrich Dipl.-Ing., 72218 Wildberg (DE)
(74) Vertreter: Hössle & Kudlek

(57) **Zusammenfassung**

Die erfindungsgemäße Filtervorrichtung zur Reinigung von partikelhaltigem Gas umfaßt eine Gaseintrittsöffnung (20) zur Zufuhr von zu reinigendem Gas zu mindestens einer insbesondere in Modulbauweise ausgebildeten Filterkammer (14, 16) und Umströmung mindestens einer in der Filterkammer (14, 16) im wesentlichen horizontal anordenbaren Filterpatrone und einen unterhalb der mindestens einen Filterkammer (14, 16) angeordneten Bunker (18) zur Aufnahme und Abfuhr abgereinigter Partikel, wobei die Gaseintrittsöffnung (20) dem Bunker (18) zugeordnet ist und eine Anströmung der mindestens einen Filterpatrone (42) im wesentlichen axial erfolgt. Zur Ausbildung eines vor dem stromaufwärts liegenden Ende der mindestens einen Filterpatrone (42) ausgebildeten Zufuhrkanal (A) erfolgt die Halterung der Filterpatrone (42) insbesondere mit einer Spannstange (50), deren Länge im wesentlichen der Länge der Filterkammer (14, 16) entspricht, wobei die Spannstange (50) sich im wesentlichen entlang der Längsachse der Filterpatrone erstreckt und ein Spannmittel (62) zur Beaufschlagung eines zugeordneten geschlossenen Stirnendes (45) der Filterpatrone (42) aufweist.

## Beschreibung

Die vorliegende Erfindung betrifft eine Filtervorrichtung zur Reinigung von partikelhaltigem Gas gemäß dem Oberbegriff des Hauptanspruchs sowie eine Vorrichtung zur Halterung von Filterpatronen in einer Filtervorrichtung.

Derartige Filtervorrichtungen sind bekannt und werden zur Reinigung von mit Partikeln verunreinigtem Gas, insbesondere von staubhaltiger Luft in Abluftreinigungs-Anlagen verwendet. Die bekannten Filtervorrichtungen umfassen Filterkammern mit darin einlegbarem Filtermaterial, das zumeist in Form von hohlzylindrischen Filterpatronen vorliegt. Die zu reinigende Abluft wird auf das Filtermaterial geleitet, die die Verunreinigung darstellenden Partikel bleiben in dem Filtermaterial zurück und Reinluft wird abgesaugt. Von Zeit zu Zeit werden die Filterpatronen in dem Reinigungsluftstrom entgegengesetzter Richtung mit Druckluft beaufschlagt, um das Filtermaterial der Filterpatronen zu reinigen. Unterhalb der Filterkammern ist ein Staubbunker zur Aufnahme und Abfuhr der abgereinigten Partikel angeordnet. Eine Auslaßöffnung des Staubbunkers steht mit einem Staubtopf oder dergleichen Behälter in Verbindung.

Aus der DE 44 05 597 C1 ist eine Filtervorrichtung der gattungsgemäßen Art mit einer oder mehreren Filterkammern bekannt, bei der die Filterpatronen im wesentlichen waagerecht angeordnet in die Filterkammern eingebracht sind, die nach oben und unten offen sind. Über dem durch die Filterkammern gebildeten Filtergehäuse ist ein Gaseintrittsmodul angeordnet, über das zu reinigendes Gas auf die darunterliegenden Filterpatronen geleitet wird. Die Abfuhr von gereinigtem Gas erfolgt über den Filterpatronen nachgeordnete zweite Kammern der Filterkammern, die nach unten in einen Gasaustrittskanal münden. Unterhalb der jeweils nach oben und unten offenen Filterkammern ist ein Bunker angeordnet, in dem die abgereinigten Partikel aufgefangen und einem unterhalb des im wesentlichen trichterförmig ausgestalteten Bunkers angeordneten Staubtopf zugeführt werden. Die bekannte Filtervorrichtung funktioniert nach dem sogenannten Fallstrom-Prinzip, bei dem die zu reinigende Staubluft senkrecht von oben nach unten durch das Filtermaterial geleitet wird, so daß eine radiale Umströmung der Filterpatronen stattfindet. Der Vorteil des Fallstrom-Prinzips liegt darin begründet, daß die von oben nach unten geleitete Luft gleichzeitig beim Reinigen abgeblasene Staubpartikel nach unten in den Staubbunker mitnimmt, so daß auch bei sehr feinen und leichten Staubpartikeln unter Ausnutzung der Schwerkraft eine sehr gute Abscheidung erzielt wird. Jedoch werden in dieser Anordnung die oberen Filterpatronen stärker beaufschlagt als die unteren Filterpatronen, so daß die oberen Filterpatronen einem wesentlich höherem Verschleiß unterliegen.

Demgegenüber wird erfindungsgemäß eine Filtervorrichtung mit den Merkmalen des Anspruchs 1 vorgeschlagen. Demnach ist die Gaseintrittsöffnung in einem Gaseintrittsmodul vorgesehen, welches den oberen Teil des Bunkers bildet und somit zwischen der Filtervorrichtung und dem den unteren Teil des Bunkers bildenden Staubtrichter angeordnet ist. Eine Anströmung der mindestens einen Filterpatrone erfolgt im wesentlichen axial. Durch die im wesentlichen axiale Anströmung der Filterpatronen wird eine relativ gleichförmige und schonende Umströmung des Filtermaterials erreicht, so daß dessen filterwirksame Oberfläche gut genutzt wird. Strömungstechnisch vorteilhaft wirkt sich aus, daß die Anströmung der Filterpatronen im wesentlichen zunächst axial entlang der Mantelfläche der Filterpatrone erfolgt und dann der Absaugrichtung der Reinluft aus dem Innern der Filterpatronen entspricht. Durch die im wesentlichen horizontale Anordnung der Filterpatronen und den darunterliegenden Staubbunker zur Aufnahme und Abfuhr gereinigter Partikel kann der positive Schwerkrafteffekt des Fallstrom-Prinzips genutzt werden.

In Ausgestaltung der Erfindung erfolgt die im wesentlichen axiale Anströmung der mindestens einen Filterpatrone durch eine im wesentlichen radiale Zufuhr von zu reinigendem Gas in einen vor dem stromaufwärts liegenden Ende der Filterpatrone ausgebildeten Zufuhrkanal. Durch diese Maßnahme wird eine strömungstechnisch besonders vorteilhafte Anströmung aller Filterpatronen erreicht, da die Anströmung sehr homogen und mit nur geringen Geschwindigkeitsunterschieden im Strömungsprofil erfolgt. Jede Filterkammer der erfindungsgemäßen Filtervorrichtung ist somit in zwei Abschnitte unterteilt, nämlich einen stromaufwärts liegenden ersten Abschnitt, der einen Zufuhrkanal für das zu reinigende Gas bildet und einen durch Einlegen einer (oder ggf. mehrerer) Filterpatrone gebildeten zweiten Abschnitt mit Filtermaterial (Reinigungsabschnitt). Jeder Filterkammer ist stromabwärts jeweils eine an sich bekannte Kammer zur Abfuhr des gereinigten Gases zugeordnet.

In weiterer Ausgestaltung der Erfindung ist der Bunker in einen der Gaseintrittsöffnung nachgeordneten Gaszufuhrbereich und einen der mindestens einen Filterkammer nachgeordneten Partikelableitbereich unterteilt. Durch die erfindungsgemäße Unterteilung des Staubbunkers wird dieser in einen Überdruckbereich (Gaszufuhrbereich) und einen strömungsberuhigten Unterdruckbereich (Partikelableitbereich) aufgeteilt, wodurch ein besonders effektives Strömungsprofil erzielt werden kann.

In besonders vorteilhafter Weiterbildung der Erfindung ist zur Unterteilung des Bunkers eine Trennwand vorgesehen, die sich in dem Bunker von einem filterkammerseitigen oberen Ende des Gaseintrittsmoduls schräg nach unten bis in den Staubtrichter erstreckt. Durch diese schräge Anordnung der Trennwand wird eine Verwirbelung des durch die Gaseintrittsöffnung zugeleiteten Gases vor dessen Weiterleitung in die mindestens eine Filterkammer erzielt. Diese Verwirbelung, auch Zyklonwirbel genannt, hat den Vorteil, daß dem in die mindestens eine Filterkammer zuzuleitenden Gasstrom eine höhere Gleichmäßigkeit (gegenüber dem diffusen Gasstrom nach Eintritt durch die Gaseintrittsöffnung) sowie eine der weiteren Luftleitung entsprechenden Drehrichtung verliehen wird.

In weiterer Ausgestaltung der Erfindung verläuft die Trennwand in einem oberen Abschnitt schräg und in einem unteren Abschnitt im wesentlichen senkrecht. Durch diese erfindungsgemäße Maßnahme wird die Zyklonwirkung weiter verstärkt. Insbesondere erweist sich als vorteilhaft, daß das untere Ende der Trennwand in eine Auslaßöffnung des Bunkers reicht.

In besonders vorteilhafter Weiterbildung der Erfindung ist das untere Ende der Trennwand als frei bewegliche Klappe ausgebildet, die zwischen einer schwerkraftbedingten ersten Position und einer eine Seitenwand des Partikelableitbereichs des Bunkers dicht beauf schlagenden zweiten Position verstellbar ist. Im normalen Betrieb der Filtervorrichtung wird die frei bewegliche Klappe aufgrund des im Gaszufuhrbereich herrschenden Überdrucks in die die Seitenwand des Partikelableitbereichs beaufschlagende zweite Position gedrückt, so daß der Partikelableitbereich in keiner Strömungsverbindung mit dem Gaszufuhrbereich steht und sich somit in dem Partikelableitbereich eine unbeeinträchtigte beruhigte Strömungszone ausbilden kann, in der Staubpartikel schwerkraftbedingt nach unten fallen. In dieser Anordnung wird die Aufrechterhaltung des Fallstrom-Prinzips gewährleistet, da eine Aufwärtsströmung unterbunden wird und somit eine Abwärtsströmung zwischen den Filterpatronen erzeugt wird. Die nach unten gefallenen Staubpartikel sammeln sich auf der frei beweglichen Klappe. Übersteigt die Gewichtskraft der auf der Klappe abgelagerten Staubpartikel die überdruckbedingte Verstellkraft, so schwingt die Klappe nach unten und die angesammelten Staubpartikel werden durch die Auslaßöffnung des Bunkers in einen zugeordneten Staubbehälter oder dergleichen abgeführt. Die Gewichtskraft der Klappe kann dabei von dem Abreinigungsimpuls überlagert werden, so daß eine portionsweise Abgabe der angesammelten Staubpartikel in den Staubbehälter erfolgen kann.

Vorteilhafterweise ist die Klappe an einer nach außen verlängerten Achse angelenkt, an deren außenliegendem Ende ein Endstück zur Anzeige und/oder zur Einstellung der Klappenposition angeordnet ist. Somit wird eine stete Kontrolle der Klappenposition durch das Bedienpersonal von außen ermöglicht. Insbesondere kann beispielsweise beim Verstopfen der Öffnung eine Freigabe per Hand erfolgen oder auch eine zeitgesteuerte Betätigung der Klappe vorgesehen sein.

In weiterer Ausgestaltung der Erfindung kann die Klappe ein verstellbares Gewicht zur Voreinstellung ihrer Öffnungs- und Schließkraft aufweisen. Durch diese Maßnahme wird eine Anpassung der Klappenbewegung an die jeweilig im Betrieb anfallende Staubsorte, d.h. insbesondere die Dichte und das Volumen des Staubs, erfolgen.

Zur weiteren Verbesserung der Zyklonwirkung ist der Übergang zwischen dem schrägen und dem senkrechten Abschnitt der Trennwand vorteilhafterweise muldenförmig ausgebildet.

In weiterer vorteilhafter Ausgestaltung der Erfindung ist in dem Gaszufuhrbereich ein Lochblech zur Ausbildung einer strömungsberuhigten Zone im unteren Abschnitt des Gaszufuhrbereichs und zur Vorabscheidung von groben Staubpartikeln angeordnet. Vorzugsweise erstreckt sich das Lochblech über den Grundriß des Gaszufuhrbereichs. Es hat sich außerdem - insbesondere im Hinblick auf die Vorabscheidung - als vorteilhaft erwiesen, das Lochblech im wesentlichen dachförmig auszubilden.

Insbesondere zur Förderung der erfindungsgemäßen Aufteilung der Filterkammer in die zwei vorstehend beschriebenen Abschnitte wird des weiteren eine Vorrichtung zur Halterung von Filterpatronen mit den Merkmalen des Anspruches 10 vorgeschlagen. Die erfindungsgemäße Vorrichtung zur Halterung für Filterpatronen umfaßt neben zwei an sich bekannten, sich über die gesamte Filterkammerlänge erstreckenden Rohre zum Auflegen der Filterpatrone (Tragerohre) eine weitere, nachfolgend auch als Spannstange bezeichnete Stange, deren Länge im wesentlichen der Länge der Filterkammer entspricht und die im eingesetzten Zustand parallel zu einer Längsachse der zu halternden Filterpatrone verläuft, wobei die Stange mit einem in Bezug auf die Strömungsrichtung des zu reinigenden Gases stromaufwärts angeordneten ersten Ende an einem zugeordneten Stirnende der Filterkammer befestigbar ist. Vorteilhafterweise ist die Stange mittels eines an dem ersten Ende angeordneten Nutensteins oder dergleichen lösbar hintergreifend in eine an dem zugeordneten Stirnende der Filterkammer angeordnete Nut eingreifbar ausgebildet. Die Länge der Spannstange ist so gewählt, daß diese mit ihrem gegenüberliegenden zweiten Ende an einem am Kopfende der Filterpatrone angeordneten Haltekreuz, Einströmdüse oder dergleichen festlegbar ist. Im Bereich des ersten Endes der Spannstange ist ein Spannmittel zur Beaufschlagung eines zugeordneten geschlossenen Stirnendes der Filterpatrone vorgesehen. Das Spannmittel dient dazu, die Filterpatrone in einer von dem zugeordneten Stirnende der Filterkammer beabstandeten Position zu beaufschlagen, so daß zwischen dem geschlossenen Stirnende der Filterpatrone und dem Stirnende der Filterkammer ein freier Abschnitt erzeugt wird, der als Zufuhrkanal dient. Die erfindungsgemäße Spannstange kann dabei entweder fest oder lösbar an dem Stirnende der Filterkammer befestigt sein, wobei sich die beschriebene lösbar hintergreifende Anordnung mittels eines an dem entsprechenden Ende der Spannstange angeordneten Nutensteins als besonders vorteilhaft erweist. Der Nutenstein ist mit der Spannstange fest verbunden, wodurch diese beim Spannen und Entspannen verdrehgesichert ist. Bei eingelegter und über die Spannstange geschobener Filterpatrone wird das gegenüberliegende zweite Ende der Spannstange am Kopfende der Filterpatrone festgelegt. Dies erfolgt beispielsweise durch Festschrauben mittels eines auf ein an dem zweiten Ende ausgebildetes Gewinde aufschraubbaren Gegenstücks. Durch das Festlegen bzw. Festschrauben wird ein Druck auf das Kopfende der Filterpatrone ausgeübt, wodurch diese in die Filterkammer hinein und auf das das gegenüberliegende geschlossene Stirnende der Filterpatrone beaufschlagende Spannmittel gedrückt wird. Somit wird die Filterpatrone in axialer Richtung unter Ausbildung eines als Zufuhrkanal dienenden Abstandes zwischen Filterpatrone und gegenüberliegendem Stirnende der Filterkammer fest und unverrückbar gehaltert. Die Spannstange dient zudem nach dem Aushängen als Auszugselement für die mindestens eine Filterpatrone.

In Ausgestaltung der Erfindung ist das geschlossene Ende der Filterpatrone durch eine dicht am Ende der Filterpatrone anliegende, federnd gelagerte Platte gebildet. Diese Platte kann fest und dicht an dem Stirnende der Filterpatrone anliegend ausgebildet sein. Vorzugsweise ist die Platte jedoch formschlüssig und dicht gegenüber der Stange auf der Stange verschiebbar angeordnet und das offene Stirnende der einzulegenden und zu halternden Filterpatrone wird an die Platte angelegt, wobei beim Festlegen der Stange eine Dichtung an dem Stirnende zwischen Filterpatrone und anliegender Platte mittels vorzugsweise am Ende der Filterpatrone angeordneten Dichtungselementen erzielt wird.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im folgenden unter Bezugnahme auf die Zeichnung ausführlich beschrieben.
- Figur 1: zeigt eine erfindungsgemäße Filtervorrichtung in seitlicher, teilweise aufgeschnittener Ansicht.
- Figur 2: zeigt die Filtervorrichtung der Figur 1 in Blickrichtung II in Frontansicht.
- Figur 3: zeigt eine Frontansicht auf eine Nutenplatte der erfindungsgemäßen Vorrichtung zur Halterung von Filterpatronen.
- Figur 4: zeigt ein Detail einer Filterkammer mit Halterungsvorrichtung der Filtervorrichtung der Figur 1 in Ausschnittsvergrößerung.

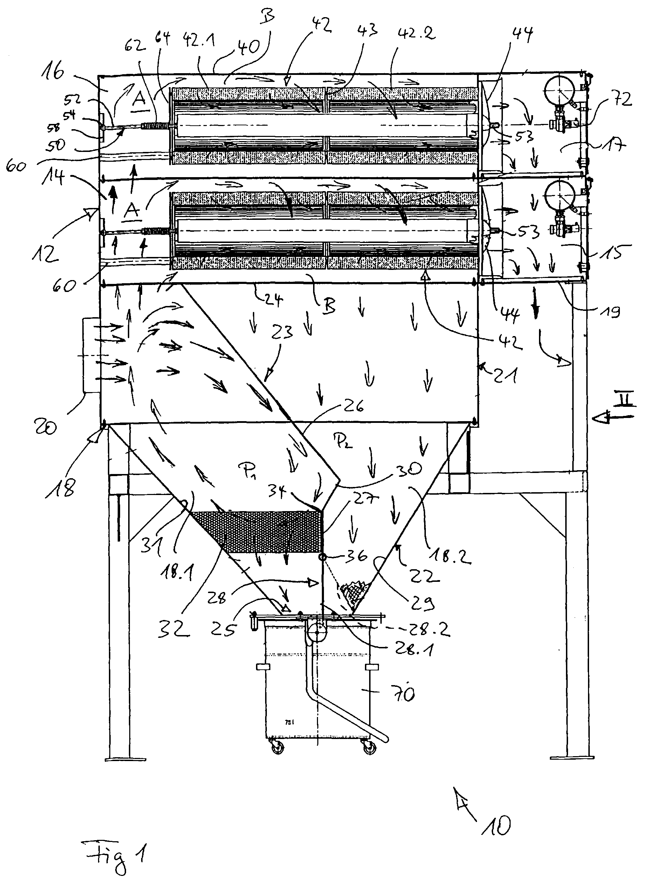

Figur 1 zeigt eine erfindungsgemäße Filtervorrichtung 10 mit einem aus zwei modular übereinander angeordneten Filterkammern 14, 16 gebildeten Filtergehäuse 12 und einem unterhalb des Filtergehäuses 12 angeordneten Bunker 18.

Der Bunker 18 ist aus zwei Teilen gebildet, nämlich einem oberen Gaseintrittsmodul 21 mit im wesentlichen rechteckigem Querschnitt, dessen Länge im wesentlichen der Länge der darauf aufgesetzten Filterkammer 14, 16 entspricht, wodurch der modulare Aufbau der dargestellten und beschriebenen Filtervorrichtung 10 unterstützt wird. Das Gaseintrittsmodul 21 des Bunkers 18 ist mit einem darunter angeordneten Staubtrichter 22 verbunden, der einen sich nach unten verjüngenden, im wesentlichen trichterförmigen Querschnitt aufweist. Selbstverständlich ist die Ausbildung des Bunkers 18 nicht auf die dargestellte und beschriebene zweiteilige Ausgestaltung beschränkt, sondern es sind auch einteilige oder aus mehr als zwei Teilen bestehende Bunker möglich, die zur Erleichterung der Partikelabfuhr zumindest abschnittsweise trichterförmig ausgebildet sind.

Der Bunker 18 ist mit einer Gaseintrittsöffnung 20 versehen, die in dem Ausführungsbeispiel der Figur 1 an der linken Stirnseite des Gaseintrittsmoduls 21 des Bunkers 18 angebracht ist und durch die ein zu reinigendes partikelhaltiges Gas zugeführt werden kann.

Im Innern des Bunkers 18 ist erfindungsgemäß eine Trennwand 23 vorgesehen, die sich von einem filterkammerseitigen oberen Ende 24 des Bunkers 18 durch das Gaseintrittsmodul 21 und den Staubtrichter 22 des Bunkers 18 nach unten erstreckt bis zu einer an dem unteren Trichterende des Staubtrichters 22 ausgebildeten Auslaßöffnung 25. Die Trennwand 23 verläuft in einem oberen Abschnitt 26 schräg und in einem unteren Abschnitt 27 im wesentlichen senkrecht nach unten. Das untere, in die Auslaßöffnung 25 des Bunkers 18 reichende Ende der Trennwand 23 ist als frei bewegliche Klappe 28 ausgebildet, die an der unteren Kante des senkrechten Abschnitts 27 der Trennwand 23 angelenkt und zwischen einer schwerkraftbedingten ersten Position 28.1 (durchgehend eingezeichnet) und einer eine Seitenwand 29 des Bunkers 18 dicht beaufschlagenden zweiten Position 28.2 (gestrichelt eingezeichnet) verstellbar. Im Übergang zwischen ihrem schrägen Abschnitt 26 und ihrem senkrechten Abschnitt 27 ist die Trennwand 23 als Mulde 30 ausgebildet.

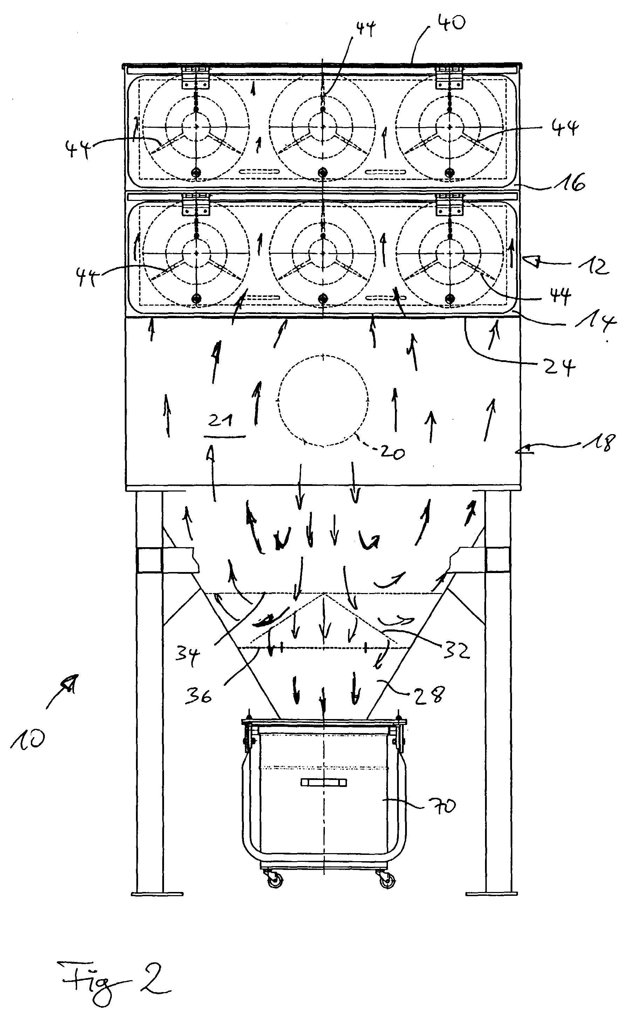

Durch die Trennwand 23 erfolgt eine Aufteilung des Innenraums des Bunkers 18 in einen der Gaseintrittsöffnung zugeordneten Gaszufuhrbereich 18.1 und einen von der Gaseintrittsöffnung 20 abgetrennten Partikelableitbereich 18.2. In einem unteren Abschnitt des Gaszufuhrbereichs 18.1 etwas oberhalb von der Auslaßöffnung 25 ist ein Lochblech 32 angeordnet, das sich über den gesamten Grundriß des Gaszufuhrbereichs 18.1 auf dieser Höhe erstreckt und im wesentlichen dachförmig ausgebildet ist (vgl. auch Figur 2). Vorteilhafterweise ist das Lochblech 32, wie dies in dem Ausführungsbeispiel der Figur 1 dargestellt ist, zwischen einer unteren Abrißkante 34 der Mulde 30 und der Anlenkachse 36 der Klappe 28 angeordnet.

Auf dem oberen offenen Ende 24 des Bunkers 18 sind die ein Filtergehäuse 12 bildenden Filterkammern 14, 16 übereinander aufgesetzt. Die beiden Filterkammern 14, 16 sind oben und unten jeweils offen, wobei auf die Filterkammer 16 ein dicht abschließender Deckel 40 aufgesetzt ist.

In jeder der beiden Filterkammern 14, 16 sind jeweils drei Filterpatronen horizontal und auf gleicher Höhe parallel zueinander angeordnet. In der Seitenansicht der Figur 1 ist jeweils nur eine Filterpatrone 42 in jeder Filterkammer 14, 16 dargestellt, in der Draufsicht der Figur 2 sind die jeweils die Filterpatronen abschließenden Einströmdüse 44 erkennbar. Diese Einströmdüsen 44 sind in der mit gleichem Datum eingereichten deutschen Patentanmeldung "Einströmdüse für eine Filterpatrone" derselben Anmelderin ausführlich beschrieben. Die Anzahl der verwendeten Filterkammern und der darin einsetzbaren Filterpatronen ist selbstverständlich im Rahmen der vorliegenden Erfindung frei variierbar.

Bei den Filterpatronen 42 handelt es sich um konventionelle Filterpatronen, die im Stand der Technik wohl bekannt sind und auf deren detaillierte Beschreibung im Rahmen dieser Anmeldung verzichtet wird. Wie aus der Darstellung der Figur 1 erkennbar ist, ist jede sogenannte Filterpatrone 42 tatsächlich aus zwei kürzeren Teilpatronen 42.1, 42.2 zusammengesetzt, die koaxial hintereinander liegend angeordnet sind, wobei im Zwischenraum zwischen den beiden Teilpatronen 42.1, 42.2 jeweils ein Dichtring 43 angeordnet ist. Dieses Zusammensetzen von zwei oder mehreren Filterpatronen zu einer Gesamtpatrone ist ebenfalls bekannt. Selbstverständlich ist die Erfindung auch zur Verwendung mit einer aus einer einzigen Patrone bestehenden Filterpatrone geeignet.

Da die Filterkammern 14, 16 länger sind als die darin eingesetzten Filterpatronen 42, erfolgt durch Einlegen der Filterpatronen 42 in die Filterkammern 14, 16 eine Unterteilung jeder Filterkammer in zwei Abschnitte, nämlich einen ersten Abschnitt A, in dem sich kein Filtermaterial befindet, und einen zweiten Abschnitt B, in dem sich (bei eingesetzter Filterpatrone) Filtermaterial befindet. Im Betrieb der erfindungsgemäßen Filtervorrichtung hat der erste Abschnitt A einer jeden Filterkammer 14, 16 die Funktion eines Zufuhrkanals, während die zweiten Abschnitte B die "Reinigungsabschnitte" sind.

Bevor nachfolgend die Betriebsweise der erfindungsgemäßen Filtervorrichtung anhand des dargestellten Ausführungsbeispiels näher beschrieben wird, folgt zunächst eine Erläuterung der Halterungsvorrichtung der Filterpatronen 42, für die selbständig Schutz beansprucht wird.

Die erfindungsgemäße Vorrichtung zur Halterung von Filterpatronen in einer Filtervorrichtung mit einer Filterkammer (im folgenden kurz Halterungsvorrichtung genannt) umfaßt eine Stange 50, deren Länge im wesentlichen der Länge der Filterkammer 14, 16 entspricht und so gewählt ist, daß die Stange 50 an beiden Längsenden der Filterkammer festlegbar ist. Die im folgenden als Spannstange bezeichnete Stange 50 ist mit einem an einem ersten Ende 52 der Spannstange 50 angebrachten Nutenstein 54 lösbar hintergreifend in eine an der zufuhrkanalseitigen Stirnwand der Filterkammer angeordneten Nut 56 eingreifbar ausgebildet. Diese Stirnwand liegt der durch die Einströmdüse 44 "verschließbaren" offenen Seite, durch die die Filterpatrone 42 eingelegt wird, entgegen. Die Einströmdüse 44 dient somit gleichzeitig als Spann- und Dichtelemente für die Filterpatrone 42.

Im Bereich des ersten Endes 52 der Spannstange 50 ist des weiteren ein der Spannstange 50 ihren Namen gebendes Spannmittel 62 vorgesehen. Das Spannmittel 62 ist im Ausführungsbeispiel der Figuren 1 und 4 eine Wendelfeder 62, die mittels einer einen Anschlag bildenden Mutter 63 auf der Spannstange 50 in Richtung zu dem ersten Ende hin festgelegt ist. Das dem durch die Kontermutter 63 gebildeten Anschlag ferne Ende der Wendelfeder 62 beaufschlagt eine Platte 64, die dazu geeignet ist, das zugeordnete Stirnende 45 der Filterpatrone 42 zu verschließen. Um einen dichten Verschluß des Stirnendes 45 der Filterpatrone 42 zu erzielen, ist ein Dichtring 65 zwischen Platte 64 und Filterpatrone 42 vorgesehen. Die Platte 64 entspricht mit ihrer Form im wesentlichen dem Querschnitt der Filterpatrone 42. Vorteilhafterweise ist die Platte 64 mittels einer mittigen Bohrung auf die Spannstange 50 formschlüssig und dicht aufgesetzt und auf dieser verschiebbar angeordnet.

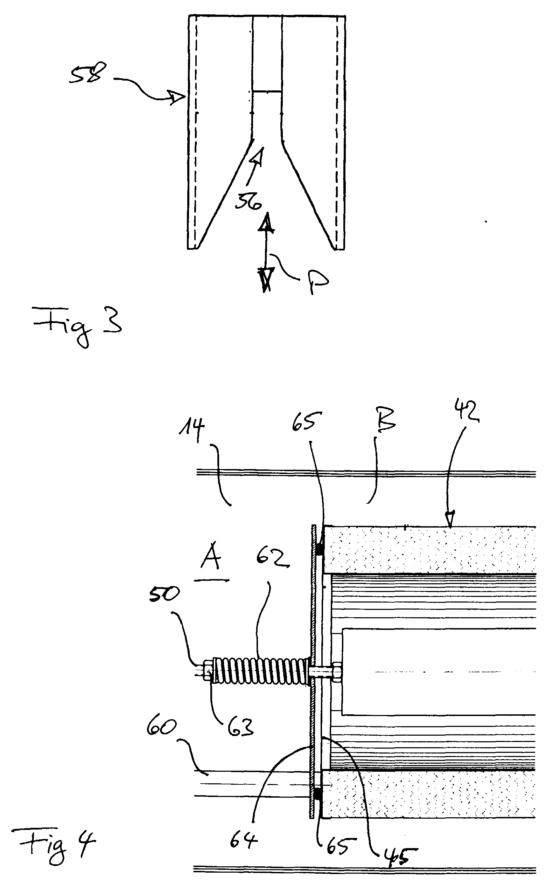

Zum Einlegen der Filterpatrone 42 in die Filterkammer wird die Filterpatrone 42 über die Spannstange 50 geführt. Dies kann entweder außerhalb der Filterkammer erfolgen, so daß die Filterpatrone und die Spannstange (mit der daran angeordneten Platte 64) gemeinsam in die Filterkammer eingelegt werden, oder die Spannstange 52 wird mit dem den Nutenstein 54, das Spannmittel 62 und die Platte 64 tragenden Ende 52 voran in die Filterkammer eingeführt und mit dem Nutenstein 54 hintergreifend in die dafür vorgesehene Nut 56 eingesetzt, woraufhin die Filterpatrone über die in der Filterkammer befindliche (verankerte und verdrehgesicherte) Spannstange geführt wird. Um das Einsetzen des Nutensteins 54 in die Nut 56 zu erleichtern, ist diese insbesondere nach unten hin trichterförmig geöffnet ausgebildet, wie dies anhand der Figur 3 veranschaulicht ist. Der Nutenstein 54 kann im Sinne des eingezeichneten Doppelpfeiles P einfach in die Nut 56 eingeführt und auch aus dieser wieder entnommen werden. Durch die hintergreifende Ausbildung ist bei in die Nut 56 eingesetztem Nutenstein 54 eine Verschiebung der Spannstange in axialer Richtung ausgeschlossen. Die Nut 56 kann beispielsweise durch eine Nutenplatte 58 gebildet sein, die etwa mittig an der zufuhrkanalseitigen Stirnseite der Filterkammer angebracht wird. Eine mögliche Ausgestaltung der Nutenplatte 58 ist in Figur 3 dargestellt.

Beim Einsetzen wird die Filterpatrone 42 (bzw. die jeweiligen Teilpatronen 42.1, 42.2) in die Filterkammer eingeschoben und in an sich bekannter Weise auf zwei beabstandet und parallel zueinander auf gleicher Höhe horizontal angeordnete Tragrohre 60 aufgelegt. In der Darstellung der Figuren 1 und 4 ist jeweils eine dieser beiden Tragrohre eingezeichnet.

Nachdem die Spannstange 52 in der Filterkammer verankert und die Filterpatrone 42 über die Spannstange 50 geführt und auf den Tragrohre 60 aufgelegt wurde, wird das gegenüberliegende Ende der Filterpatrone 42 mit einer Halte- und Festlegstruktur beaufschlagt, bei der es sich um ein konventionelles Haltekreuz oder insbesondere um die bereits erwähnte Einströmdüse 44 handeln kann. Die Spannstange 50 ragt mit einem dem ersten Ende 52 gegenüberliegenden zweiten Ende 53 durch eine dazu vorgesehene Bohrung in die Einströmdüse 44 und wird dort mittels einer nicht näher dargestellten Mutter derart festgelegt, daß die Einströmdüse 44 dicht abschließend gegen das Ende der Filterpatrone 42 und die Filterpatrone 42 dadurch wiederum gegen die Platte 64 und das Spannmittel 62 gedrückt wird, so daß eine Halterung der Filterpatrone 42 in fest eingespanntem Zustand und eine Aufteilung der Filterkammer in einen als Zufuhrkanal dienenden freien Abschnitt A und einen mit der Filterpatrone 42 belegten zweiten Abschnitt B mit Filtermaterial zur Reinigung von partikelhaltigem Gas erreicht wird.

In der beschriebenen Ausgestaltung läßt sich die erfindungsgemäße Spannstange darüber hinaus besonders einfach handhaben. Bei in die Nut 56 eingeführtem Nutenstein 54 wird die Spannstange 50 mit der auf die Spannstange 50 aufgesetzten verschiebbaren Platte 64 auf den Tragrohren 60 abgestützt. Aufgrund der durch den deutlich längeren, zum offenen Ende der Filterkammer weisenden freien Abschnitt der Spannstange 50 erzeugten Hebelwirkung wird die Spannstange 50 in der im wesentlichen horizontalen Lage gehalten, da das mit dem Nutenstein 54 versehene Ende 52 der Spannstange 50 nach oben in die Nut gedrückt wird. Dadurch läßt sich die Filterpatrone besonders einfach über die Spannstange in das Innere der Filterkammer hineinschieben, da die Spannstange nicht extra gehalten werden muß. Auch das Aufsetzen des Haltekreuzes bzw. der Einströmdüse gestaltet sich sehr einfach, da das freie zweite Ende 53 der Spannstange 50 sich bereits an der gewünschten Position befindet und das Haltekreuz bzw. die Einströmdüse nur aufgeschoben werden muß. In gleicher Weise gestaltet sich selbstverständlich auch das Herausnehmen der Filterpatronen einfach, da die Spannstange in ihrer Position verbleibt und nicht herunterkippt oder -fällt. Somit wird auch das Herausnehmen der schwer zu erreichenden zweiten Filterpatrone erheblich erleichtert. Zum Herausnehmen der Spannstange 50 aus der Filterkammer wird das freie zweite Ende 53 nach Herausnahme der Filterpatrone lediglich angehoben, wodurch der Nutenstein 54 am gegenüberliegenden ersten Ende 52 aufgrund des Kippeffekts um den Auflagepunkt in der Bohrung der Platte 64, die ja auf den Tragrohren 60 abgestützt ist, aus der Nut 56 herausgeschoben wird, und die Spannstange 50 muß nur noch aus der Filterkammer herausgezogen werden.

Im Betrieb der erfindungsgemäßen Filtervorrichtung wird zu reinigendes partikelhaltiges Gas durch die Gaseintrittsöffnung 20 in das Innere des Bunkers 18 eingeleitet. Das Gas, bei dem es sich insbesondere um staubhaltige Luft handelt, wird dabei in den vorstehend beschriebenen Gaszufuhrbereich 18.1 des Bunkers 18 eingeleitet, wo es auf die schräg angeordnete Trennwand 23 prallt und im Sinne der eingezeichneten Pfeile nach schräg unten abgeleitet wird. Durch die vor dem senkrechten unteren Abschnitt 27 der Trennwand 23 ausgebildete Mulde 30 wird das eingeleitete und abgelenkte Gas besonders effektiv zur gegenüberliegenden Seitenwand 31 hin abgelenkt und dadurch in eine Wirbelbewegung versetzt. Auf diese Weise entsteht im Innern des Gaszufuhrbereichs 18.1 eine Verwirbelung des eingeleiteten Gases, auch Zyklonwirbel genannt. Das entlang der Seitenwand 31 nach oben zurückgelenkte Gas strömt, wie aus Figur 2 erkennbar ist, um die Gaseintrittsöffnung 20 herum nach oben in Richtung der Filterkammern. In der Darstellung der Figur 2 zeigen die eingezeichneten Pfeile den Verlauf des Gases im Gaszufuhrbereich 18.1 des Bunkers 18.

Durch das im unteren Bereich des Gaszufuhrbereichs 18.1 angeordnete Lochblech 32 wird zum einen erreicht, daß der unterhalb des Lochblechs liegende Bereich strömungsberuhigt ist, und zum anderen daß in dem Gas enthaltene grobe Partikel abgeschieden werden (Vorabscheidung) und im Sinne der eingezeichneten Pfeile nach unten in Richtung der Auslaßöffnung 25 des Bunkers 18 fallen, wo sie durch die Auslaßöffnung 25 hindurch in einen (fahrbaren) Staubbehälter 70 gelangen. Selbstverständlich können im Rahmen der vorliegenden Erfindung auch andere Austragsorgane, wie z. B. eine Zellenradschleuse, ein Schlitzventil, eine Doppelpendelklappe vorgesehen sein.

Durch das in den Gaszufuhrbereich 18.1 zugeführte Gas entsteht in dem Gaszufuhrbereich 18.1 ein relativer Überdruck P₁, der bewirkt, daß die an dem unteren Ende des senkrechten unteren Abschnitts 27 der Trennwand 23 angelenkte Klappe 28 aus ihrer schwerkraftbedingten Ruheposition 28.1 in Richtung des Partikelableitbereichs 18.2 gedrückt bzw. gesaugt wird, bis sie die Seitenwand 29 des Partikelableitbereichs 18.2 des Bunkers 18 beaufschlägt.

Durch die beschriebene Zyklonwirkung in dem Gaszufuhrbereich 18.1 wird das zugeführte Gas zuerst nach unten und dann wieder nach oben in Richtung der Filterkammern umgelenkt. Das Gas, das aufgrund der durch das Lochblech 32 erreichten Vorabscheidung im wesentlichen nur noch Feinstaub enthält, tritt durch das offene obere Ende 24 des Bunkers 18 durch den oberen schrägen Abschnitt 26 der Trennwand 23 gelenkt aus und in den Zufuhrkanal A der darüber angeordneten Filterkammern 14, 16. Aufgrund der beschriebenen Luftleitwirkung der erfindungsgemäßen Anordnung tritt das Gas mit einem sehr gleichförmigen Geschwindigkeitsprofil in den Zufuhrkanal A der Filterkammern ein, wo es nicht zuletzt wegen der dem Gas verliehenen Verwirbelung auf die Filterpatronen 42 hin abgelenkt wird und eine im wesentlichen axiale Anströmung der Filterpatronen 42 in den Filterkammern 14, 16 erzielt wird. Das Gas tritt im Sinne der eingezeichneten Pfeile durch die aus Filtermaterial gebildete Mantelhülle der Filterpatronen 42 in deren Inneres, wobei eine Abscheidung und Abreinigung der Staubpartikel aus dem Gas erfolgt. Die im Innern der Filterpatronen befindliche gereinigte Luft wird über das gegenüberliegende Kopfende der Filterpatronen und durch jeder Filterkammer nachgeordnete zweite Kammern 15, 17 im Sinne der eingezeichneten Pfeile durch einen Gasaustritt 19 zu einem nicht näher dargestellten Ventilator abgesogen.

Unterhalb der Reinigungsbereiche B der Filterkammern 14, 16 schließt der Partikelableitbereich 18.2 des Staubbunkers 18 an. In dem Partikelableitbereich 18.2 ist ein im Vergleich zu dem Druck P₁ im Gaszufuhrbereich 18.1 niedrigerer Druck P₂ ausgebildet. Darüber hinaus handelt es sich bei dem Partikelableitbereich 18.2 aufgrund der erfindungsgemäßen Gasführung in der Filtervorrichtung um eine strömungsberuhigte Zone, in der, wie durch Messungen belegt wurde, in der Praxis fast keine Gasströmung herrscht. Aus diesem Grunde können von dem Filtermaterial der Filterpatronen 42 abfallende Staubteilchen ungehindert (schwerkraftbedingt) durch den Partikelableitbereich 18.2 nach unten fallen, ohne daß sie von einer störenden Gasströmung eventuell wieder nach oben getrieben werden. Da die Hauptströmung im Innern der Filterkammern wie beschrieben im wesentlichen axial erfolgt und die abzureinigende Luft im Reinigungsabschnitt B im Sinne der dort eingezeichneten Pfeile zum Innern der Filterpatronen hin wieder absinkt, liegt auch hier wie bei dem eingangs beschriebenen Fallstrom-Prinzip ein Gleichstrom-Prinzip vor, so daß abgereinigte Staubpartikel in Richtung des Staubbunkers mitgenommen werden. Dort fallen die Teilchen, wie bereits beschrieben, ohne Beeinträchtigung aufgrund störender Gasströme direkt nach unten, wo sie sich an der in der Unterdruckposition 28.2 befindlichen Klappe 28 sammeln. Sobald die Gewichtskraft der angesammelten Staubpartikel auf der Klappe 28 größer wird als die durch den Überdruck P₁ auf die Klappe ausgeübte Druckkraft, wird die Klappe 28 in Richtung ihrer Ruhestellung 28.1 gedrückt und der angesammelte Staub kann durch die Auslaßöffnung 25 in den zugeordneten Staubbehälter 70 fallen.

Eine weitere Möglichkeit, die Klappe 28 aus der "geschlossenen" Position 28.2 in Richtung der Ruhestellung 28.1 zu bewegen, besteht darin, den Druck P₂ im Partikelableitbereich 18.2 über den Druck P₁ im Gaszufuhrbereich 18.1 zu erhöhen. Dies ist dann der Fall, wenn mittels von in den zweiten Kammern 15, 17 angeordneten und jeder Filterpatrone zugeordneten Druckluftanlagen 72 Druckluft in das Innere der Filterpatronen 42 eingeblasen wird, um eine Abreinigung der am Filtermaterial der Filterpatronen 42 abgeschiedenen Staubpartikel zu erzielen. Durch diese Druckluftreinigung werden die Staubpartikel von den Filterpatronen abgeblasen und aufgrund der Druckerhöhung werden bereits im Partikelableitbereich 18.2 befindliche Staubpartikel mit nach unten gerissen, die Klappe 28 wird aus ihrer geschlossenen Position 28.2 kurzzeitig aufgestoßen und angesammelter Staub in den Staubbehälter 70 befördert. Nach der Druckluftabreinigung sinkt der Druck P₂ im Partikelableitbereich 18.2 wieder, die Strömung beruhigt sich und die Klappe 28 wird wieder in die geschlossene Position 28.2 gedrückt bzw. gesaugt. Noch im Partikelableitbereich 18.2 befindliche Staubpartikel können dann ungehindert schwerkraftbedingt nach unten fallen.

Die erfindungsgemäße Ausführung der Bunkerleitbleche in Verbindung mit der Klappe ermöglicht somit die Umsetzung des sogenannten Fallstromprinzips im Filterraum, d.h. Die Luftführung im Filterraum ist von oben nach unten gerichtet und gestattet somit das Abreinigen der Stäube in dem Staubbunker ohne störende Aufwärtsströmung.

## Patentansprüche

1. Filtervorrichtung zur Reinigung von partikelhaltigem Gas, mit einer Gaseintrittsöffnung (20) zur Zufuhr von zu reinigendem Gas zu mindestens einer insbesondere in Modulbauweise ausgebildeten Filterkammer (14, 16) und Umströmung mindestens einer in der Filterkammer (14, 16) im wesentlichen horizontal anordenbaren Filterpatrone (42) und mit einem unterhalb der mindestens einen Filterkammer (14, 16) angeordneten Bunker (18) zur Aufnahme und Abfuhr abgereinigter Partikel,
**dadurch gekennzeichnet,**
daß die Gaseintrittsöffnung (20) dem Bunker (18) zugeordnet ist und eine Anströmung der mindestens einen Filterpatrone (42) im wesentlichen axial erfolgt.

2. Filtervorrichtung nach Anspruch 1, dadurch gekennzeichnet, daß die im wesentlichen axiale Anströmung der mindestens einen Filterpatrone (42) durch eine im wesentlichen radiale Zufuhr von zu reinigendem Gas in einen vor dem stromaufwärts liegenden Ende der Filterpatrone (42) ausgebildeten Zufuhrkanal (A) erfolgt.

3. Filtervorrichtung nach Anspruch 1 oder 2, dadurch gekennzeichnet, daß der Bunker (18) in einen der Gaseintrittsöffnung (20) nachgeordneten Gaszufuhrbereich (18.1) und einen der mindestens einen Filterkammer (14, 16) zugeordneten Partikelableitbereich (18.2) unterteilt ist.

4. Filtervorrichtung nach Anspruch 3, dadurch gekennzeichnet, daß zur Unterteilung des Bunkers (18) eine Trennwand (23) vorgesehen ist, die sich von einem filterkammerseitigen oberen Ende (24) schräg nach unten erstreckt.

5. Filtervorrichtung nach Anspruch 4, dadurch gekennzeichnet, daß die Trennwand (23) in einem oberen Abschnitt (26) schräg verläuft und in einem unteren Abschnitt (27) im wesentlichen senkrecht verläuft.

6. Filtervorrichtung nach Anspruch 4 oder 5, dadurch gekennzeichnet, daß das untere Ende der Trennwand (23) in eine Auslaßöffnung (25) des Bunkers (18) reicht.

7. Filtervorrichtung nach einem der Ansprüche 4 bis 6, dadurch gekennzeichnet, daß das untere Ende der Trennwand (23) als frei bewegliche Klappe (28) ausgebildet ist, die zwischen einer schwerkraftbedingten ersten Position (28.1) und einer eine Seitenwand (29) des Partikelableitbereichs (18.2) des Bunkers (18) dicht beaufschlagenden zweiten Position (28.2) verstellbar ist.

8. Filtervorrichtung nach Anspruch 7, dadurch gekennzeichnet, daß die Klappe (28) an einer nach außen verlängerten Achse (36) angelenkt ist, an deren außenliegendem Ende ein Endstück zur Anzeige und/oder Einstellung der Klappenposition angeordnet ist.

9. Filtervorrichtung nach Anspruch 7 oder 8, dadurch gekennzeichnet, daß die Klappe (28) ein verstellbares Gewicht zur Voreinstellung ihrer Öffnungs- und Schließkraft aufweist.

10. Filtervorrichtung nach einem der Ansprüche 5 bis 9, dadurch gekennzeichnet, daß der Übergang zwischen dem schrägen Abschnitt (26) und dem senkrechten Abschnitt (27) der Trennwand (23) muldenförmig (30) ausgebildet ist.

11. Filtervorrichtung nach einem der Ansprüche 3 bis 10, dadurch gekennzeichnet, daß in dem Gaszufuhrbereich (18.1) ein Lochblech (32) angeordnet ist.

12. Vorrichtung zur Halterung von Filterpatronen in einer Filtervorrichtung mit einer Filterkammer, deren Länge größer ist als die Länge der darin einzusetzenden Filterpatrone, insbesondere in einer Filtervorrichtung nach einem der Ansprüche 1 bis 9, mit einer Stange (50), deren Länge im wesentlichen der Länge der Filterkammer (14, 16) entspricht und die im eingesetzten Zustand parallel zu einer Längsachse der zu halternden Filterpatrone (42) verläuft, wobei die Stange (50) mit einem in Bezug auf die Strömungsrichtung eines zu reinigenden Gases stromaufwärts angeordneten ersten Ende (52) an einem zugeordneten Stirnende der Filterkammer (14, 16) befestigbar ist und mit einem gegenüberliegenden zweiten Ende (53) an einem Haltekreuz, einer Einströmdüse (44) oder dergleichen der Filterpatrone (42) festlegbar ist, und wobei im Bereich des ersten Endes (52) der Stange (50) ein Spannmittel (62) zur Beaufschlagung eines zugeordneten geschlossenen Stirnendes (45) der Filterpatrone (42) vorgesehen ist.

13. Vorrichtung nach Anspruch 12, bei dem die Stange (50) mittels eines an dem ersten Ende (52) angeordneten Nutensteins (54) oder dergleichen lösbar hintergreifend in eine an dem zugeordneten Stirnende der Filterkammer (14, 16) angeordnete Nut (56) eingreifbar ausgebildet ist.

14. Vorrichtung nach Anspruch 12 oder 13, bei der das geschlossene Stirnende (45) der Filterpatrone (42) durch eine dicht am Ende der Filterpatrone (42) anliegende Platte (64) gebildet ist.

15. Vorrichtung nach Anspruch 14, bei der die Platte (64) formschlüssig und dicht auf der Stange (50) verschiebbar angeordnet ist.
